# FASCICULE DE BREVET EUROPEEN

(11) **EP 2 455 549 B1**
(45) Date de publication et mention de la délivrance du brevet: **03.06.2015**
(21) Numéro de dépôt: 11159378.6
(22) Date de dépôt: 23.03.2011
(51) Int. Cl.: E02D 27/42

(54) **Fondation en béton intégrant un ensemble de lestage**
Betongründung, die eine Ballasteinheit einschließt
Concrete foundation including a ballasting assembly

(30) Priorité: 23.11.2010 FR 1004544
(43) Date de publication de la demande: 23.05.2012
(73) Titulaire: FMGC, 44110 Chateaubriant (FR)
(72) Inventeur: Ferron, Laurent, 35130 La Guerche de Bretagne (FR); Gemeux, Joël, 44110 Soudan (FR)
(74) Mandataire: Vidon Brevets & Stratégie

(56) Documents cités:
- WO-A1-01/34977
- WO-A2-2009/027663
- DE-U1-202009 013 844
- US-A1- 2009 178 353

## Description

Le domaine de l'invention est celui des travaux de construction.

Plus précisément, l'invention concerne la conception et la réalisation de fondations, pour des édifices en lien avec les secteurs de l'industrie et du bâtiment.

L'invention s'applique aux fondations et supports permettant l'installation au sol de machines et/ou d'édifices très lourds et très volumineux, en particulier mais non exclusivement l'installation d'équipements issus de l'industrie des énergies renouvelables, tels que les éoliennes, terrestres et offshore, et les panneaux solaires.

La fondation d'un ouvrage a pour objectif d'assurer la transmission et la répartition des charges de cet ouvrage sur le sol, en tenant compte de son poids propre et des surcharges liées à son utilisation et aux variations climatiques.

Traditionnellement, on distingue les fondations de type superficielle et les fondations de type profonde, le choix du type de fondation étant fait en fonction des propriétés du sol, ainsi que de la nature et de la taille de l'édifice à implanter. Une étude géotechnique permet notamment de définir le type de fondation et le niveau d'assise (notamment pour être hors-gel) de l'ouvrage.

En particulier, un sol de bonne portance et peu sujet au tassement peut conforter le choix de fondations superficielles, réalisées par exemple à l'aide d'armatures métalliques et de béton. A l'inverse, les sols de moindre portance et de moindre stabilité peuvent imposer la réalisation de fondations profondes, incluant des systèmes complémentaires de type pieux, puits, ou longrines.

Dans tous les cas, une masse théorique de béton nécessaire pour réaliser la fondation peut être calculée ou estimée, au préalable, en fonction de l'édifice à installer et de la profondeur à laquelle une couche suffisamment stable peut être atteinte dans le sol.

Une première couche de béton, faiblement dosé, dit béton de propreté, peut être coulée dans l'excavation préalablement définie et creusée dans le sol. Une période de séchage est ensuite observée, et un terrassement est ainsi réalisé.

Des armatures, par exemple en acier, sont alors généralement montées sur le terrassement, un coffrage délimitant la fondation est réalisé, puis une semelle de béton constituant la partie principale de la fondation est coulée.

Par la suite, le terme béton désignera aussi bien l'une ou l'autre des couches de béton susceptibles de constituer la fondation, y compris les armatures qu'elles sont susceptibles de contenir.

Cependant, certains sols, tels que les sols rocailleux, peuvent présenter, à une très faible profondeur, une couche qui est stable mais qu'il s'avère très difficile de creuser. Dans ce cas, les fondations en béton doivent s'étendre sur une très grande surface et/ou présenter une plus grande hauteur au-dessus du sol, à défaut de pouvoir être très profondes. Il en résulte que :
- la surface vouée à être creusée est alors beaucoup plus étendue, rendant inexploitable une plus grande partie du terrain, et/ou que
- les fondations ne peuvent pas être complètement enterrées, ce qui tend à nuire fortement à l'esthétisme de l'édifice.

En outre, les sols de plus faible portance et/ou de moindre stabilité peuvent être sujets à de fortes pressions internes (milieux humides...). L'utilisation d'une masse de béton supérieure à l'estimation théorique peut alors s'avérer nécessaire et le volume à creuser être d'autant plus important, pour que la fondation soit suffisamment résistante et que l'édifice supporté soit stable.

Or, la part des coûts de creusage et de béton dans le coût des fondations est très élevée, en particulier s'agissant des fondations profondes.

Par ailleurs, la couche stable du sol servant de base à une fondation constitue rarement une surface homogène, en termes de stabilité et de portance, et cette hétérogénéité s'avère d'autant plus marquée et pénalisante que la fondation s'étend sur une grande surface.

Les fondations communément réalisées ont donc notamment pour inconvénients de nécessiter des volumes de béton très importants, d'occuper des surfaces au sol de grande envergure, et d'engendrer des forages très coûteux. Un autre inconvénient des fondations traditionnelles réside dans le fait que leur démantèlement, qui doit souvent être anticipé avant même leur mise en oeuvre, peut s'avérer très difficile et onéreux, et qu'il ne permet aucune réutilisation des matériaux dont elles sont constituées. Or, cette optimisation du démantèlement est un besoin d'autant plus important qu'il concerne le domaine des énergies renouvelables, donc notamment des éoliennes et des « champs photovoltaïques ».

L'invention a notamment pour objectif de pallier les inconvénients de l'art antérieur.

En particulier, l'invention a pour objectif de minimiser l'étendue et le coût des fondations en béton.

Plus précisément, un objectif de l'invention est de réduire le volume à creuser dans le sol nécessaire pour la réalisation d'une fondation.

Un autre objectif de l'invention est de réduire la surface au sol mobilisée par une fondation, ainsi que son éventuelle hauteur hors-sol.

L'invention vise également la réalisation de fondations optimisées par rapport aux différents types de sol.

Un autre objectif de l'invention est de permettre une mise en oeuvre plus simple et plus rapide des fondations.

L'invention a également pour objectif de faciliter le démantèlement des fondations et le recyclage d'éléments les constituant.

Ces différents objectifs, ainsi que d'autres qui apparaîtront par la suite, sont atteints avec une fondation qui comporte une partie réalisée avec du béton et qui, selon l'invention, présente en partie supérieure un ensemble dit de lestage, ledit ensemble de lestage présentant une masse volumique comprise entre 6500 kg/m3 et 8000 kg/m3.

La masse volumique du béton habituellement utilisé étant compris entre 2000 kg/m3 et 3000 kg/m3, l'ensemble de lestage selon l'invention présente un volume très inférieur à un volume de béton de même masse.

Par conséquent, l'utilisation d'un tel ensemble de lestage dans une fondation peut permettre, pour obtenir une masse de matière nécessaire donnée, de réduire considérablement le volume de béton à couler. Potentiellement, le volume à creuser dans le sol peut être réduit d'autant, la surface au sol mobilisée par la fondation peut être fortement diminuée, et la hauteur de la fondation, notamment hors du sol, peut aussi être limitée.

L'intégration d'un ensemble de lestage dans une fondation traditionnelle, c'est-à-dire réalisée par exemple avec un terrassement en béton, sur lequel une armature est montée puis noyée dans une autre couche de béton, permet en outre de conjuguer les avantages du béton avec ceux de l'ensemble de lestage.

Ainsi, la partie en béton peut occuper le volume théorique minimal imposé par les contraintes du sol, tandis que l'ensemble de lestage peut être utilisé en complément afin d'apporter la masse juste nécessaire pour que les conditions de stabilité de l'édifice soient réunies.

Un sol assez meuble, notamment, caractérisé par une faible portance et/ou une faible stabilité, peut imposer la réalisation de fondations plus profondes, ou une surface de contact plus importante entre le sol et la fondation. Grâce à l'invention, l'épaisseur de la couche de béton peut alors être minimisée, un volume de béton éventuellement superflu peut être supprimé, et la différence de masse induite par la réduction de la quantité de béton est compensée, au plus juste, par l'ensemble de lestage. Au final, la fondation est dimensionnée de façon optimale, par rapport aux contraintes du sol et de l'édifice à supporter, et les dimensions de l'excavation à creuser peuvent aussi être minimisées.

L'invention permet donc une optimisation du dimensionnement d'une fondation et ce, que l'édifice soit fixé sur une partie en béton ou sur l'ensemble de lestage. Dans ce dernier cas, le béton peut être utilisé pour réaliser une surface plane et lisse, mise à niveau pour supporter l'ensemble de lestage. Cette possibilité peut s'avérer intéressante notamment lorsque le sol présente un profil très chaotique, et/ou lorsque l'ensemble de lestage est un élément monobloc, préfabriqué, éventuellement moins adaptable aux irrégularités du sol.

Dans tous les cas, l'ensemble de lestage selon l'invention est positionné dans la partie supérieure de la fondation et ce, quel que soit le mode de fixation de l'édifice, et quelle que soit la forme de la partie en béton constituant la fondation. De cette façon, la masse apportée par l'ensemble de lestage est appliquée au plus près de l'édifice à supporter, qui s'étend au-dessus de la fondation, de sorte qu'elle contribue également à rigidifier et stabiliser l'édifice.

Cependant, du béton peut également être présent au-dessus de l'ensemble de lestage, soit parce que l'ensemble de lestage est placé dans une partie « en creux » du volume de béton séché, soit parce que l'ensemble de lestage est noyé dans une couche de béton. Ce dernier cas peut survenir, par exemple, lorsque l'édifice est directement monté sur l'ensemble de lestage. L'ensemble de lestage constitue alors un élément permettant de renforcer le béton dans la fondation, tel une armature, mais différant par le fait qu'il est présent dans la partie supérieure de la fondation, au plus près de l'édifice.

Selon une solution préférée, ledit ensemble de lestage est superposé sur ladite partie réalisée avec du béton.

De cette façon, la partie en béton peut réaliser une interface principale entre le sol et l'ensemble de lestage, permettant la meilleure adaptation possible avec le sol et, notamment, une optimisation de la quantité de béton qu'il est nécessaire de couler. La partie en béton peut alors aussi constituer une plate-forme permettant de positionner précisément l'ensemble de lestage (« réglage d'assiette »).

La partie en béton est coulée, et éventuellement séchée, préalablement à la dépose de l'ensemble de lestage. Ainsi, l'ensemble de lestage peut être retiré aussi facilement qu'il a été placé par rapport à la partie en béton.

Des ensembles de lestage de formes multiples et dimensions très variées peuvent être envisagés et préfabriqués. Leur adaptation sur la partie en béton, notamment en terme de stabilité et de répartition de charge, est d'autant meilleure que le béton est au préalable coulé dans des coffrages présentant une géométrie complémentaire.

Préférentiellement, ledit ensemble de lestage présente une masse volumique comprise entre 7000 kg/m3 et 7200 kg/m3 et, plus avantageusement encore, égale à 7200 kg/m3.

Ainsi, l'ensemble de lestage peut occuper un volume environ trois fois inférieur à une même masse de béton. Cette réduction de volume, pour une masse donnée, peut permettre de réduire soit la surface, soit la hauteur, soit à la fois la surface et la hauteur, d'une couche de béton dans une fondation dans laquelle est intégrée un ensemble de lestage selon l'invention.

Avantageusement, ledit ensemble de lestage est réalisé avec de la fonte. Ce matériau permet à l'ensemble de lestage d'être très résistant à la corrosion lorsqu'il est protégé par un apprêt primaire, et il facilite son recyclage.

Selon une solution préférée, ladite partie réalisée avec du béton comprend des moyens de fixation d'un édifice, ledit ensemble de lestage recouvrant ladite partie réalisée avec du béton en ménageant un espace pour lesdits moyens de fixation.

De cette façon, l'ensemble de lestage n'interfère pas avec les moyens de fixation de l'édifice, qui peuvent être réalisés suivant les procédés traditionnels.

L'ensemble de lestage peut être réalisé d'un seul tenant et installé en une seule fois sur la partie de la fondation réalisée avec du béton. Il peut aussi être réalisé en plusieurs tronçons, placés puis éventuellement fixés les uns aux autres.

Selon une autre solution préférée, ledit ensemble de lestage comprend des moyens de fixation d'un édifice.

Ainsi, la partie en béton d'une fondation peut être complétée, voire remplacée, par l'ensemble de lestage, pour assurer la fixation d'un édifice. Le béton peut alors être surtout destiné à réaliser la liaison avec le sol, ce qui peut contribuer à minimiser le volume de béton à couler et les dimensions de l'excavation à creuser. L'ensemble de lestage, qui peut se présenter sous la forme d'un socle au pied de l'édifice, améliore alors encore la rigidification de l'ensemble.

Selon des modes de réalisation préférentiels, lesdits moyens de fixation sont des moyens de fixation d'un mât d'éolienne ou de panneaux solaires.

Le mât d'une éolienne et des panneaux solaires peuvent ainsi être fixés, directement sur une partie en béton de la fondation, ou sur un ensemble de lestage intégré à la fondation.

De plus, l'invention porte sur un procédé de réalisation d'une fondation, comprenant une opération de coulage de béton dans une excavation ou dans un coffrage, suivie d'une période de séchage du béton, caractérisé en ce qu'il comprend une opération complémentaire effectuée après ladite période de séchage du béton, ladite opération complémentaire consistant à positionner un ensemble dit de lestage sur ledit béton, ledit ensemble de lestage présentant une masse volumique comprise entre 6500 kg/m3 et 8000 kg/m3.

D'autres caractéristiques et avantages de l'invention apparaîtront plus clairement à la lecture de la description suivante de deux modes de réalisation préférentiels de l'invention, donnés à titre d'exemples illustratifs et non limitatifs, et des dessins parmi lesquels :
- la figure 1 illustre, de façon schématique et selon une vue en coupe, une fondation selon un premier mode de réalisation préférentiel de l'invention ;
- la figure 2 illustre, de façon schématique et en vue de dessus, un ensemble de lestage selon la figure 1 ;
- la figure 3 est une vue agrandie de la partie E de la figure 2 ;
- la figure 4 illustre, de façon schématique et selon une vue en coupe, une fondation selon un deuxième mode de réalisation préférentiel de l'invention ;
- la figure 5 illustre, de façon schématique et selon une vue en perspective, un ensemble de lestage selon la figure 4.

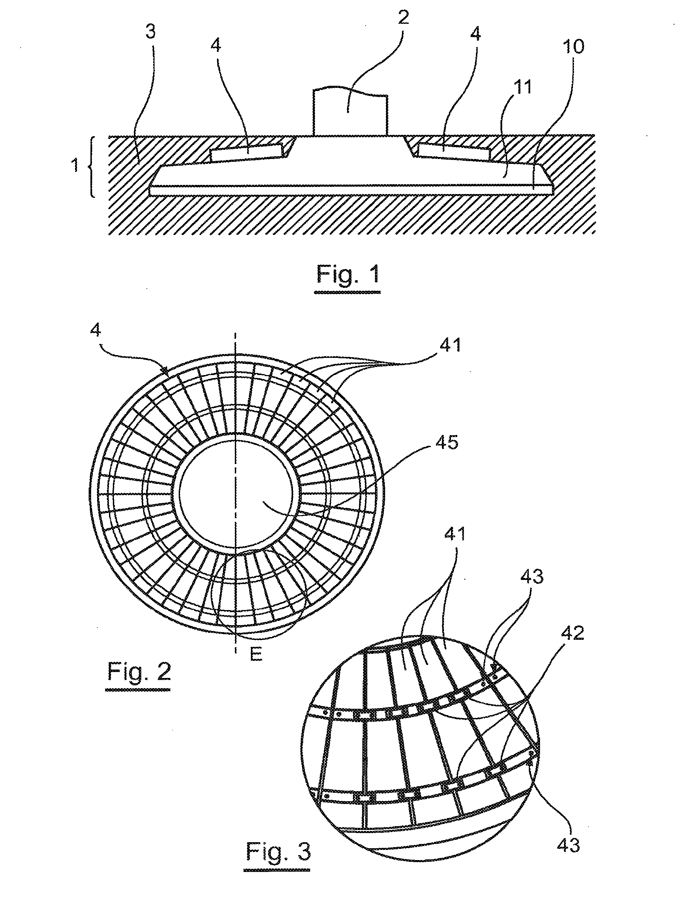

En référence à la figure 1, une fondation 1 destinée à supporter un édifice 2 comprend traditionnellement :
- un terrassement 10 en béton, parfois aussi appelé béton de propreté ;
- une semelle 11 en béton.

Pour réaliser la fondation 1, une excavation est creusée avec des moyens appropriés dans le sol 3, jusqu'à ce qu'une couche du sol suffisamment stable et portante soit atteinte. Le béton de propreté est alors coulé puis, lorsqu'il est sec, une armature et/ou des moyens de fixation de l'édifice (non représentés) sont montés et mis de niveau sur le terrassement. Un coffrage est ensuite installé pour définir la forme extérieure de la semelle 11. Le béton constituant la semelle 11 est alors coulé, puis une période de séchage est observée. Lorsque le béton est sec, le coffrage peut être retiré.

Selon l'invention, la fondation 1 présente en partie supérieure un ensemble de lestage 4. Cet ensemble de lestage présente une masse volumique comprise entre 6500 kg/m3 et 8000 kg/m3, de telle sorte qu'il présente un volume sensiblement inférieur à une même masse de béton. Ainsi, la masse du terrassement 10 et de la semelle 11 en béton est réduite au minimum, imposé par les contraintes du sol, tandis que l'ensemble de lestage 4 apporte un complément de masse nécessaire pour assurer la stabilité de l'édifice 2.

L'ensemble de lestage 4 illustré sur les figures 1 à 3 est positionné sur la semelle 11 en béton lorsque celle-ci est sèche. Ainsi, l'ensemble de lestage est superposé sur la partie de la fondation réalisée avec du béton.

L'ensemble de lestage 4 est, sur les figures 1 à 3, composé d'une pluralité d'éléments de lestage 41, placés côte à côte, de telle sorte qu'ils forment un anneau centré sur l'édifice 2, à la base et au plus près de celui-ci.

Les éléments de lestage 41 sont fixés les uns aux autres par l'intermédiaire de brides 42 en acier, vissées. Pour cela, chaque élément de lestage 41 présente des taraudages 43 destinés à coopérer avec des vis traversant les brides 42. Les taraudages 43 sont également utilisés pour fixer des moyens de manutention des éléments de lestage, tels que des anneaux de levage (non représentés). L'ensemble de lestage 4 n'est pas nécessairement fixé sur la partie en béton comprise dans la fondation 1. La compacité et la stabilité de la fondation sont renforcées par le fait que l'ensemble de lestage et la partie en béton présentent, au niveau de leur interface, des formes complémentaires (forme tronconique en l'occurrence).

La fondation 1 présente des moyens de fixation de l'édifice (non représentés) qui, sur la figure 1, sont compris dans la partie réalisée avec du béton et, plus particulièrement, dans la semelle 11 en béton. L'ensemble de lestage 4, sous la forme d'un anneau, recouvre alors cette partie réalisée avec du béton en ménageant un espace 45 pour les moyens de fixation.

L'édifice 2 peut consister en une éolienne ou des panneaux photovoltaïques. Les moyens de fixation compris dans la semelle 11 en béton sont alors des moyens de fixation d'un mât d'éolienne ou de panneaux solaires.

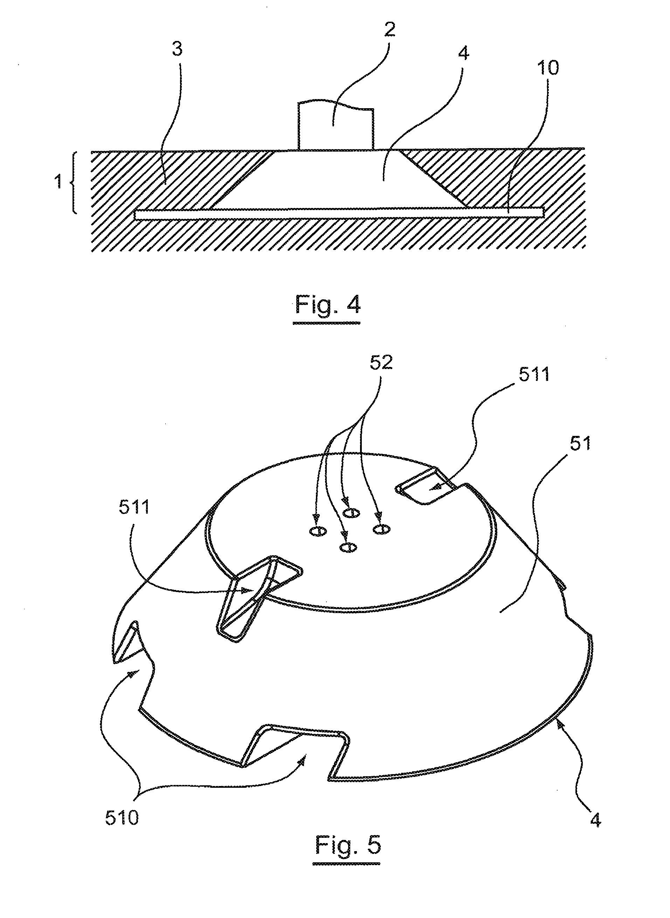

Dans un autre mode de réalisation préférentiel de l'invention, illustré par la figure 4, un ensemble de lestage 4 est directement intercalé entre un terrassement 10 en béton et l'édifice 2.

Ainsi, l'ensemble de lestage est supporté par le terrassement et il supporte l'édifice.

L'ensemble de lestage, positionné sur le terrassement en béton lorsque celui-ci est sec, est superposé sur la partie en béton de la fondation.

L'ensemble de lestage étant plus dense que le terrassement en béton, il peut, comme cela est illustré en coupe sur la figure 4, présenter une surface inférieure à celle du terrassement.

L'ensemble de lestage illustré sur les figures 5 et 6 est constitué d'un bloc principal 51, sur lequel sont rapportés des moyens de fixation prenant la forme de trous taraudés 52 (figure 5).

Ainsi, l'ensemble de lestage comprend des moyens de fixation d'un édifice, destinés notamment à la fixation d'une éolienne ou de panneaux solaires.

Le bloc principal 51 illustré sur la figure 5 comporte des évidements inférieurs 510 qui, en coopérant avec des formes complémentaires présentes dans la partie en béton des fondations, permettent de prépositionner l'ensemble de lestage et de limiter sa mobilité dans un plan horizontal.

De même, des évidements supérieurs 511 présents sur le bloc principal 51 sont susceptibles de coopérer avec des formes complémentaires de l'édifice à supporter, pour faciliter l'indexage et le maintien de l'édifice sur le bloc.

Ces évidements 510 et 511 peuvent être moulés, en même temps que le bloc principal 51.

L'ensemble de lestage 4 présente une masse volumique de préférence comprise entre 7000 kg/m3 et 7200 kg/m3 et, plus avantageusement encore, égale à 7200 kg/m3. Ainsi, il peut notamment et avantageusement être réalisé avec de la fonte.

D'autres modes de réalisation, basés sur le principe d'un ensemble de lestage intégré dans une fondation, tel celui qui vient d'être décrit, sont bien sûr envisageables sans sortir du cadre de l'invention.

En particulier, l'ensemble de lestage peut présenter une multiplicité de formes et être réalisé dans des matériaux différents de la fonte.

## Revendications

1. Fondation (1) comportant une partie réalisée avec du béton, **caractérisée en ce qu'**elle présente en partie supérieure un ensemble (4) dit de lestage, ledit ensemble de lestage (4) présentant une masse volumique comprise entre 6500 kg/m3 et 8000 kg/m3.

2. Fondation (1) suivant la revendication 1, **caractérisée en ce que** ledit ensemble de lestage (4) est superposé sur ladite partie réalisée avec du béton.

3. Fondation (1) suivant l'une quelconque des revendications 1 et 2, **caractérisée en ce que** ledit ensemble de lestage (4) présente une masse volumique comprise entre 7000 kg/m3 et 7200 kg/m3.

4. Fondation (1) suivant l'une quelconque des revendications 1 et 2, **caractérisée en ce que** ledit ensemble de lestage (4) présente une masse volumique de 7200 kg/m3.

5. Fondation (1) suivant l'une quelconque des revendications 3 et 4, **caractérisée en ce que** ledit ensemble de lestage (4) est réalisé avec de la fonte.

6. Fondation (1) suivant l'une quelconque des revendications 1 à 5, **caractérisée en ce que** ladite partie réalisée avec du béton comprend des moyens de fixation d'un édifice (2), ledit ensemble de lestage (4) recouvrant ladite partie réalisée avec du béton en ménageant un espace pour lesdits moyens de fixation.

7. Fondation (1) suivant l'une quelconque des revendications 1 à 5, **caractérisée en ce que** ledit ensemble de lestage (4) comprend des moyens de fixation d'un édifice (2).

8. Fondation (1) suivant l'une quelconque des revendications 6 et 7, **caractérisée en ce que** lesdits moyens de fixation sont des moyens de fixation d'un mât d'éolienne.

9. Fondation (1) suivant l'une quelconque des revendications 6 et 7, **caractérisée en ce que** lesdits moyens de fixation sont des moyens de fixation de panneaux solaires.

10. Procédé de réalisation d'une fondation (1), comprenant une opération de coulage de béton dans une excavation ou dans un coffrage, suivie d'une période de séchage du béton, **caractérisé en ce qu'**il comprend une opération complémentaire effectuée après ladite période de séchage du béton, ladite opération complémentaire consistant à positionner un ensemble (4) dit de lestage sur ledit béton, ledit ensemble de lestage (4) présentant une masse volumique comprise entre 6500 kg/m3 et 8000 kg/m3.

## Patentansprüche

1. Fundament (1), umfassend einen Teil, der mit Beton hergestellt ist, **dadurch gekennzeichnet, dass** es im oberen Teil eine so genannte Ballasteinheit (4) aufweist, wobei die Ballasteinheit (4) eine Dichte zwischen 6500 kg/m³ und 8000 kg/m³ aufweist.

2. Fundament (1) nach Anspruch 1, **dadurch gekennzeichnet, dass** die Ballasteinheit (4) auf dem Teil, der mit Beton hergestellt ist, angeordnet ist.

3. Fundament (1) nach einem der Ansprüche 1 und 2, **dadurch gekennzeichnet, dass** die Ballasteinheit (4) eine Dichte zwischen 7000 kg/m³ und 7200 kg/m³ aufweist.

4. Fundament (1) nach einem der Ansprüche 1 und 2, **dadurch gekennzeichnet, dass** die Ballasteinheit (4) eine Dichte von 7200 kg/m³ aufweist.

5. Fundament (1) nach einem der Ansprüche 3 und 4, **dadurch gekennzeichnet, dass** die Ballasteinheit (4) mit Schmelze hergestellt ist.

6. Fundament (1) nach einem der Ansprüche 1 bis 5, **dadurch gekennzeichnet, dass** der mit Beton hergestellte Teil Mittel zur Befestigung eines Bauwerks (2) umfasst, wobei die Ballasteinheit (4) den Teil, der mit Beton hergestellt ist, abdeckt, wobei ein Raum für die Befestigungsmittel ausgenommen ist.

7. Fundament (1) nach einem der Ansprüche 1 bis 5, **dadurch gekennzeichnet, dass** die Ballasteinheit (4) Mittel zur Befestigung eines Bauwerks (2) umfasst.

8. Fundament (1) nach einem der Ansprüche 6 und 7, **dadurch gekennzeichnet, dass** die Befestigungsmittel Mittel zur Befestigung eines Windradmasten sind.

9. Fundament (1) nach einem der Ansprüche 6 und 7, **dadurch gekennzeichnet, dass** die Befestigungsmittel Mittel zur Befestigung von Solarpaneelen sind.

10. Verfahren zur Herstellung eines Fundaments (1), umfassend einen Schritt des Gießens von Beton in einen Aushub oder eine Schalung, gefolgt von einer Trocknungsphase des Betons, **dadurch gekennzeichnet, dass** es einen ergänzenden Schritt umfasst, der nach der Trocknungsphase des Betons durchgeführt wird, wobei der ergänzende Schritt darin besteht, eine so genannte Ballasteinheit (4) auf dem Beton zu positionieren, wobei die Ballasteinheit (4) eine Dichte zwischen 6500 kg/m³ und 8000 kg/m³ aufweist.

## Claims

1. Foundation (1) comprising a part which is produced using concrete, **characterised in that** it has, at its upper part, a so-called "ballasting" assembly (4), the said ballasting assembly (4) having a density of between 6500 kg/m3 and 8000 kg/m3.

2. Foundation (1) according to Claim 1, **characterised in that** the said ballasting assembly (4) is superposed on the said part which is produced using concrete.

3. Foundation (1) according to either of Claims 1 or 2, **characterised in that** the said ballasting assembly (4) has a density of between 7000 kg/m3 and 7200 kg/m3.

4. Foundation (1) according to either of Claims 1 or 2, **characterised in that** the said ballasting assembly (4) has a density of 7200 kg/m3.

5. Foundation (1) according to either of Claims 3 or 4, **characterised in that** the said ballasting assembly (4) is produced using cast iron.

6. Foundation (1) according to any of Claims 1 to 5, **characterised in that** the said part which is produced using concrete comprises means for holding a structure (2), the said ballasting assembly (4) covering the said part which is produced using concrete while providing a space for the said holding means.

7. Foundation (1) according to any of Claims 1 to 5, **characterised in that** the said ballasting assembly (4) comprises means for holding a structure (2).

8. Foundation (1) according to either of Claims 6 or 7, **characterised in that** the said holding means are means for holding a wind turbine mast.

9. Foundation (1) according to either of Claims 6 or 7, **characterised in that** the said holding means are means for holding solar panels.

10. Method of producing a foundation (1), comprising an operation for pouring concrete into an excavation or into shuttering, followed by a period for the drying of the concrete, **characterised in that** said method comprises a supplementary operation which is carried out after the said period for the drying of the concrete, the said supplementary operation consisting in positioning a so-called "ballasting" assembly (4) on the said concrete, the said ballasting assembly (4) having a density of between 6500 kg/m3 and 8000 kg/m3.
